# EUROPEAN PATENT APPLICATION

(11) **EP 4 572 053 A1**
(43) Date of publication of application: **18.06.2025**
(21) Application number: 23217068.8
(22) Date of filing: 15.12.2023
(51) Int. Cl.: H02H 3/08, H01H 9/54, H02H 3/087

(54) **CIRCUIT BREAKER AND METHOD FOR OPERATING AN ENERGY DISTRIBUTION NETWORK WITH A CIRCUIT BREAKER**

(71) Applicant: Hitachi Rail GTS Deutschland GmbH, 71254 Ditzingen (DE)
(72) Inventor: Julve Abad, Javier, 71111 Waldenbuch (DE); Garrido Olmos, Ricardo, 71696 Möglingen (DE); Schwehn, Oliver, 71263 Weil der Stadt (DE)
(74) Representative: Kohler Schmid Möbus Patentanwälte

(57) **Abstract**

A method for operating an energy distribution network (13) with a circuit breaker (11), the circuit breaker (11) having a two interfaces (12, 14), wherein one of the interfaces (12, 14) is used as output interface (14) and the other is used as input interface (12), an evaluation-and-control unit (6) and a first switching element (3) for temporary electrical isolation of input interface (12) and output interface (14), the method comprising:
a. monitoring of current and/or voltage at the output interface (14) of the circuit breaker (11),
b. checking whether an overcurrent event is present,
wherein step a and step b are performed repeatedly,
c. when an overcurrent event is detected: electrical isolation of the input interface (12) from the output interface (14) by switching off the first switching element (3),
is characterized in that as first switching element (3) a switching element based on semiconductor is used, and that after switching off the first switching element (3) a switch-on attempt is performed, the switching-on attempt comprising: performing a further check according to step b, and in which, if the further check indicates that the overcurrent event has ended, the input interface (12) and the output interface (14) are electrically reconnected by switching on the first switching element (3), wherein after a specified number of unsuccessful switch-on attempts, the input interface (12) and the output interface (14) remain electrically isolated.

## Description

### Background of the Invention

The invention concerns a method for operating an energy distribution network with a circuit breaker, the circuit breaker having a first interface and a second interface, wherein one of the interfaces is used as output interface and the other is used as input interface, an evaluation-and-control unit, and a first switching element for temporary electrical isolation between input interface and output interface, the method comprising the following steps:
a) monitoring of current and/or voltage at the output interface of the circuit breaker,
b) checking whether an overcurrent event is present, wherein step a and step b are performed repeatedly, and
c) when an overcurrent event is detected: electrical isolation of the input interface from the output interface by switching off the first switching element. The invention also concerns an according circuit breaker.

Energy distribution networks, in particular Power Busses (i.e. arrangement in a line of several loads with a common or parallel power supply sources), are being used for providing energy to a number of loads (e.g. railway signaling elements, especially in trackside areas).

In order to protect an energy distribution network from damage caused by overcurrent, it is known to use circuit breakers, which interrupt the current flow in case of an overcurrent and can be reset to resume normal operation.

In particular in the context of distributed power provision (GTS-MLS Power Provision Architecture) the feed points of local power supply sources are required to limit/cut off the peak current in case of short circuits on the Power Bus to avoid causing electrical and thermal stress on the semiconductor elements of the Power Bus. With the existing circuit breakers, the current peaks at the feed point caused by the discharge of output capacitors of the power supplies in the event of a short circuit on the Power Bus cannot be efficiently limited.

There are currently some Electronic Circuit Breakers that could be used for this purpose ([Celduc], [Sensata], [Altran]), but these circuit breakers must be reset manually to bring the Power Bus into normal operation, thereby causing undesirable interruptions of loads operation, which is not acceptable for railway signaling elements.

### Object of the invention

It is an object of the invention to provide a method and a circuit breaker, which allow semiconductors of the energy distribution network (e.g. of a power bus) to be protected against overcurrent while keeping the energy distribution network in operation.

### Description of the invention

This object is achieved by a method for operating an energy distribution network according to claim 1 and a circuit breaker according to claim 9.

According to the invention, a switching element based on semiconductor is used as first switching element and after switching off the first switching element, a switch-on attempt is performed, the switching-on attempt comprising: performing a further check according to step b, and in which, if the further check indicates that the overcurrent event has ended, the input interface and the output interface are electrically reconnected by switching on the first switching element. After a specified number of unsuccessful switch-on attempts, the input interface and the output interface remain electrically isolated. The electrical isolation can be performed by a further switching element (see below).

The circuit breaker is interconnected between a feed point (at a first interface) and the energy distribution network (at a second interface). Depending on the direction of current, the first interface functions either as an input interface or output interface.

By monitoring the voltage and/or the current at the output interface of the circuit breaker, overcurrent events in direction from input interface to output interface can be detected.

The inventive first switching element enables faster switching compared to standard relay switches, because its technology based on semiconductors. After the first switching element, the further switching element can provide electrical isolation due to its relay's base technologies. It provides not only electrical but also galvanic isolation of input interface and output interface, which is advantageous due to safety and availability/service reasons. The first switching element is a semiconductor-based switching element and preferably comprises a solid state relay based on semiconductor, typically MOSFET (Metal Oxide Semiconductor Field-effect) transistor.

In contrast to only relays-based circuit breakers, switch-on-attempts are carried out automatically after electrical isolation of the input interface from the output interface by means of the first switching element. If the further check of the switching-on-attempt indicates that the overcurrent event is not longer present, the input interface and the output interface are electrically reconnected by switching the first switching element to conducting state. Thus, the energy distribution network can continue to operate as soon as the overcurrent event ended. On the one hand, this limits the heat in the event of e.g. a short circuit and, on the other hand, it does not interrupt the operation of the system.

If the further check of the switching-on-attempt indicates that the overcurrent event is still present, the input interface and the output interface stay electrically isolated.

In a preferred variant, the switch-on attempts are limited. I.e. the switch on attempts are repeated a limited number of times which can be configurable.

It is preferred that a current direction is determined by the evaluation-and-control unit. Thus, it can be determined which interface is the input interface and which is the output interface, even with bidirectional energy distribution networks. In this case, it can be distinguished between overcurrent events in direction from the output interface to the input interface and overcurrent events in direction from the input interface to the output interface.

In a preferred variant of the inventive method, it is provided that, if the determined direction of the current indicates an overcurrent event in direction from the output interface to the input interface, the overcurrent event does not trigger the switching element. In this case, the first switching element stays closed and the overcurrent event will not be cut off. Thus, electrical isolation of input interface and output interface is only performed if an overcurrent event from input interface to output interface is detected.

In order to detect overcurrent events in both directions the voltage is also monitored at the input interface in a preferred variant of the inventive method. This is useful in case of bidirectional energy distribution networks.

Preferably the first switching element is triggered by the evaluation-and-control unit in dependence of the results of step a and step b.

To maintain the electrical isolation between input interface and output interface, a further switching element, preferably an electro-mechanical relay, connected in series with the first switching element can be switched off. The further switching element is a device configured to provide electrical isolation as preferably done by a mechanical relay. Since the first switching element comprises semiconductor elements, which tend to burn out under high load, increased electrical safety is achieved by providing an additional mechanical relay.

It is preferred that prior to an electrical reconnection (or prior to an initial connection) of the input interface with the output interface, the capacitance of the energy distribution network is pre-charged by bypassing the electrical isolation of the further switching element with a resistive pre-charge circuit, e.g. a resistive pre-charge circuit. The "capacitance of the energy distribution network" (e.g. of a power bus) is mainly due to the capacitance of the wires and the input capacitance of the elements connected to the energy distribution network. For bypassing the electrical isolation of the further switching element, a resistor is connected in an electrical pre-charging branch bypassing the further switching element. Thereby in-rush currents are limited. After pre-charging, the further switching element is switched on. Thereafter the pre-charge circuit is disconnected, current and voltage are monitored according to step a and the first switching element is switched on, thereby reconnecting input interface and output interface.

In a special variant, the temperature of semiconductor components of the circuit breaker is monitored. The temperature monitoring is preferably done after pre-charging the capacitance of the energy distribution network.

The method according to the invention can be used particularly advantageously in railroad technology.

The circuit breaker according to the invention, in particular for an energy distribution network, comprises: a two interfaces, wherein one of the interfaces is used as output interface and the other one is used as input interface, a first switching element connected between input interface and output interface for temporary electrical isolation of input interface and output interface, an output stage monitoring circuit configured to monitor current and voltage at the output interface of the circuit breaker, and an evaluation-and-control unit connected to the output stage monitoring circuit in order to receive the monitored current and/or voltage values, and configured to detect overcurrent events and configured to trigger the solid-state relay to interrupt the current flow between input interface and output interface in case of a detected overcurrent event.

According to the invention, the first switching element is a switching element based on semiconductor, the output stage monitoring circuit is configured to continue monitoring current and voltage at the output interface of the circuit breaker even after electrical isolation of input interface and output interface, and the evaluation-and-control unit is configured to trigger the first switching element to reconnect input interface and output interface when the overcurrent event has ended.

The energy distribution network can be a DC-power bus (e.g. for Isole terre systems). Preferably, the power bus is a 2-pole power bus.

The first switching element is electrically connected in at least one of the poles of the circuit of the energy distribution network. The first switching element is electrically connected to the evaluation-and-control unit and is configured to open the circuit in case of short-circuit or overload.

Since the first switching element is based on semiconductor it comprises very fast reaction time during an overcurrent event with isolation characteristics. In particular, the first switching element can be a solid-state relay or a transistor, in particular of a bipolar junction transistor (BJT) type or a field effect transistor (FET) type.

The evaluation-and-control unit is preferably a microcontroller. Alternatively, analog logic devices can be used as evaluation-and-control unit.

Preferably an input stage monitoring circuit is provided, which is configured to monitor voltage at the input of the circuit breaker. In this case, the evaluation-and-control unit is connected to the input stage monitoring device in order to receive the monitored current and voltage values and to detect direction of current.

In a highly preferred embodiment, a further switching element, preferably an electromechanical relay, is provided between input interface and output interface, the further switching element being configured to electrically and galvanically isolate input interface and output interface from each other. While the first switching element enables a fast reaction to the detected overcurrent event, the further switching element provides for electrical safety. The further switching element only opens (i.e. further switching element is switched to be isolating) after the overcurrent event when the first switching element is finally no longer switched on (i.e. after the predetermined number of unsuccessful switch-on attempts). Since the current is already cut prior to opening the further switching element, no large arc effects arise during switching the further switching element. Therefore, simple and cheap relays can be used as further switching element.

In a preferred embodiment, a pre-charge circuit is provided which bypasses the electrical isolation provided by the further switching element. The pre-charge circuit is configured to limit current for avoiding peaks of current (inrush currents) and can be realized by an electrical path with a resistor and an electromechanical relay connected to the evaluation-and-control unit. Other implementations are possible. The resistor of the pre-charge circuit causes the capacitance of the energy distribution network to charge slowly. This avoids a power surge when switching on.

In a preferred embodiment, a temperature measuring unit is provided, which is configured to monitor the intrinsic temperature of components of the circuit breaker, in particular of semiconductor elements.

In another preferred embodiment, the evaluation-and-control unit comprises an user interface stage, in particular comprising visual indicators, buttons, potential-free input/output contacts and/or service/expansion connectors. The user interface can be used for configuring the evaluation-and-control unit and for manually switching the switching elements by maintenance personnel.

In order to avoid external power supplies, it is preferred that the circuit breaker is configured to take energy required to operate the circuit breaker from the energy distribution network. I.e. it is "self-powered" and comprises its own internal power supply and its own internal power converter. No external power supply is required. The internal power supply is electrically connected to all aforementioned components.

In order to allow remote monitoring, remote diagnosis, and a remote operation of the circuit breaker and the energy distribution network, it is preferred that a LAN/WAN communication stack is provided configured to provide a remote access. Additionally, remote supervision and remote commands are possible via input/output digital contacts.

The inventive circuit breaker is integrated in a device. For example, it is an option that the inventive circuit breaker is integrated in a longitudinal voltage decoupler. Longitudinal voltages occur in the case of interference due to overvoltages or high-frequency interference voltages between active conductors (i.e. current carrying conductors) and ground (e.g. in train operation catenary current and return current in the rail influence cables running parallel to it). Longitudinal voltage decoupler provide an electrical connection with a galvanic isolation and comprise isolation transformers as well as isolation converters as main components (other aux-iliar components are also part of longitudinal voltage decoupler).

The inventive circuit breaker can also be integrated in other devices, such as a power converter, an uninterrupted power supply, a frequency conversion or just a battery management system. The applicability of the inventive circuit breaker could include a variety of applications.

The present invention also concerns a longitudinal voltage decoupler with an inventive circuit breaker.

The inventive circuit breaker, in particular comprising output stage monitoring circuit as well as input stage monitoring circuit, can be advantageously used in a ring-shaped Power Bus or a Power Bus with bidirectional feed, since the circuit breaker can react on overcurrent events regardless of the direction from which they occur.

Preferably, the longitudinal voltage decoupler comprises two inventive circuit breaker, one on each side of the galvanic isolation.

The inventive electronic circuit breaker is preferably used in the context of train technology. In a particularly preferred embodiment, the loads of the power bus are components of the control and safety technology, typically field elements.

Further advantages of the invention can be seen from the description and the drawing. Likewise, the above-mentioned features and the features described in further detail can be used individually or in any combination according to the invention. The embodiments shown and described are not to be understood as an exhaustive list, but rather have an exemplary character for the description of the invention.

### Detailed description of the invention and drawing

- Fig. 1: shows the logical structure of a basic bidirectional electronic circuit breaker according to the invention.
- Fig. 2: shows the logical structure of a preferred bidirectional electronic circuit breaker according to the invention.
- Fig. 3: shows the method steps of the inventive method for operating an energy distribution network with the inventive electronic circuit breaker.
- Fig. 4: shows an exemplary electrical circuit of an embodiment of the inventive electronic circuit breaker shown in Fig. 2.
- Fig. 5: shows a Power Bus with several inventive electronic circuit breakers.

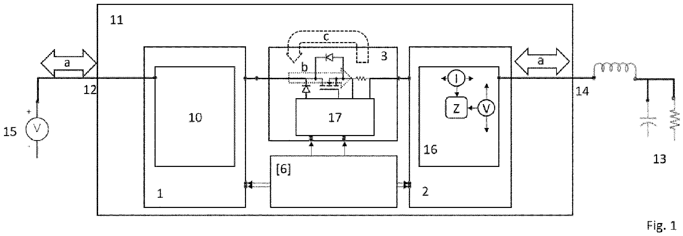

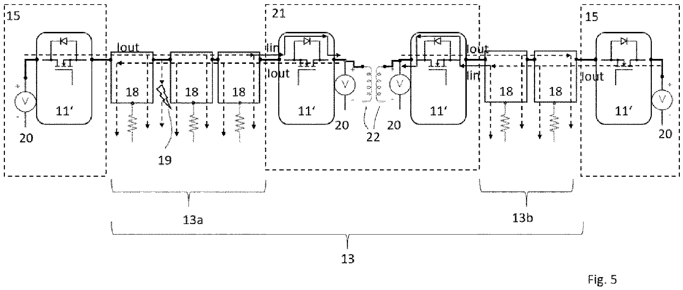

**Fig. 1** shows a basic embodiment of the inventive electronic circuit breaker **11** for an energy distribution network (here a Power Bus **13,** which is represented in Fig. 1 by a Power Bus equivalent circuit). The electronic circuit breaker 11 comprises an input stage monitoring circuit **1.** The input stage monitoring circuit 1 is connected to a feed point **15** with an external power supply **20** (see Fig. 5) via first interface **12,** which is an input interface for current flowing from feed point 15 to power bus 13. The feed point **15** supplies energy to the power bus 13. The input stage monitoring circuit 1 comprises an internal power supply **10** to power the rest of the electronic circuit breaker 11. The electronic circuit breaker 11 further comprises an output stage monitoring circuit 2, which is connected to the Power Bus 13 via an output interface 14. The output stage monitoring circuit 2 comprises sensors **16** to check the output impedance to the power bus 13. Between input stage monitoring circuit 1 and output stage monitoring circuit 2 an controlled electronic switch (first switching element **3**) with two operational states ("closed" and "open") is provided. The actual operational state depends on the output impedance provided by the output stage monitoring circuit 2. In order to control the operating state of the first switching element 3, an evaluation-and-control-unit **6** (e.g. a microcontroller) reads the output impedance provided by the output stage monitoring circuit 2, evaluates whether an overcurrent event is present or not, and controls the first switching element 3 via a driver **17** in order to open if an overcurrent event is detected. As long as the first switching element 3 is in operating state "closed", current will be allowed to pass in both directions (as indicated by double arrow a). If the first switching element 3 is in operating state "open", then the outgoing current (indicated by dotted arrow b) will be limited/cut and only the incoming current (indicated by dashed arrow c) will be allowed to pass. In order to switch to the "open " state as quick as possible, the first switching element is based on semiconductor components.

The evaluation-and-control-unit 6 is configured to repeatedly read the output impedance provided by the output stage monitoring circuit 2 and to evaluates whether the overcurrent event continues or not in order to close the first switching element 3 as soon as the overcurrent event is no longer present (switch-on-attempts). Thus, the first switching element 3 is provided for temporary electrical isolation of input interface and output interface, as well as connection of input interface and output interface if an overcurrent event is no longer present.

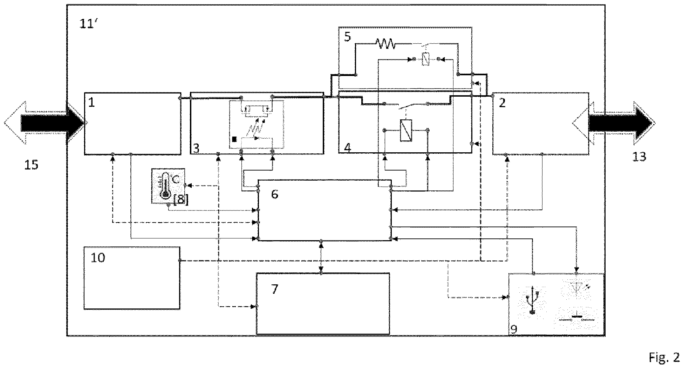

A more advanced embodiment of the inventive electronic circuit breaker 11' is shown in **Fig. 2****.** In addition to the afore mentioned components the electronic circuit breaker 11' further comprises a further switching element **4,** which is in "closed" operation state during normal operation (i.e. in the absence of any continuing overcurrent events) and which can be activated to "open" operation state in case a detected overcurrent event continues to exist and it is anticipated that the electrical isolation of input interface and output interface is not intended to be temporary. The further switching element 4 is intended to provide a long-term electrical isolation if a critical fault is detected and the first switching element 3 can/should no longer be switched on. The further switching element is a robust switching element, which provides increased electrical safety. According to the preferred embodiment, a quick reacting semiconductor-based switching element (first switching element 3) and a robust mechanical switching element (further switching element 4) are combined, thus resulting in fast reaction time and high safety.

The embodiment shown in Fig. 2 further comprises a pre-charge circuit **5.** The pre-charge circuit 5 ensures that the first switching element is switched on safely (e.g. to initially start the Power Bus 13 or to switch the Power Bus 13 back on after a permanent switch-off of the Power Bus 13, e.g. due to a permanent overcurrent event).

The pre-charge circuit 5 bypasses the electrical isolation for of the further switching element 4 and adds a resistance into the circuit so that capacitors of the first switching element 3 can be charged slowly. The pre-charge circuit 5 preferably comprises a series connection of a resistor and an electromechanical relay and is electrically connected to the evaluation-and-control-unit 6 in order to be controlled in dependence of the result of the switch-on attempts.

Prior to starting (or restarting) the electronic circuit breaker 11' and the Power Bus 13, the first switching element 3 as well as the further s switching element 4 are in operational state "open". The first switching element 3 (in particular a solid-state relay 3 of the first switching element 3) is pre-charged by closing the electromechanical relay of pre-charge circuit 5, thereby bypassing the further switching element 4. The status of the electronics is checked (self-test, temperature check) and (if ok) the further switching element is switched to operational state "closed" in order to establish a galvanic connection between interface 14 and first switching element. The galvanic connection of the pre-charge branch 5 can then be removed. If the monitoring at the output stage monitoring circuit 2 (and preferably also at the input stage monitoring circuit 1) do not indicate an overcurrent event, the first switching element 3 can be closed in order to provide an electrical connection between input interface and output interface so that the Power Bus 13 can be operated.

Fig. 2 shows further advantageous components, which can be added to the electronic circuit breaker 11', such a temperature measuring unit **8** for monitoring the temperature of electronic circuit breaker components, a user interface stage **9** for manual switching on of the first switching element 3 by maintenance personnel and a LAN/WAN communication stack **7.** The LAN/WAN communication stack 7, as well as the user interface stage 9 and the interface stage 9 are electrical connected to the first switching element 3 (or to its driver 17 respectively - which is not shown in Fig. 2), the evaluation-and-control unit 6 and (if present) the temperature measuring unit 8 in order to allow remote and/or local monitoring and remote and/or local control of the first switching element 3 and the further switching element 4. The temperature measuring unit 8 is connected to the evaluation-and-control unit 6 and (if present) the LAN/WAN communication stack 7. The monitoring and control shall be possible from both interfaces 12, 14.

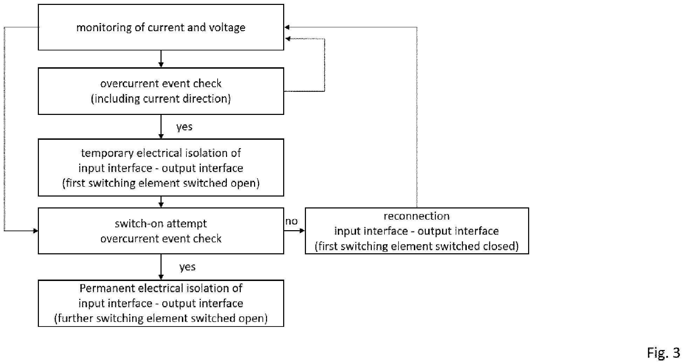

**Fig. 3** shows the method steps of the inventive method for operating an energy distribution network with an electronic circuit breaker 11'. By monitoring current and voltage at the interfaces 12, 14, overcurrent events can be detected by the evaluation- and- control unit 6. The monitoring is continuously (i.e. repeatedly in short time intervals) carried out in order to detect overcurrent event or to confirm that no overcurrent event is present or an overcurrent event has ended.

In case of an overcurrent, temporary electrical isolation of input interface and output interface is generated by switching the first switching element 3 to operational state "open". For Power Buses with bidirectional supply, the evaluation-and-control-unit 6 determines in which direction the current is flowing. If an overcurrent event is detected from the output interface to the input interface, it is ignored; if an overcurrent event is detected from the input interface to the output interface, first switching element 3 is switched open. In case of a one-sided supply, only current and voltage is preferably monitored only at the output interface.

The continuous monitoring is used to perform switch-on attempts. For performing switch-on attempts the switching element 3 can be switched to "closed" operating state and it is checked whether the overcurrent event is still present. If the overcurrent event is no longer present, input interface and output interface stay reconnected by keeping the first switching element 3 in "closed" operating state. If the overcurrent event continues, the switching element 3 is switched back to "open" operation state and another switch-on-attempt can be performed. Other switch-on attempts sequences are possible within the scope of the invention. For example the further switching element 4 can be opened together with the first switching element 3 if an overcurrent event is detected. In this case, both switching elements 3, 4 are closed for performing the switch-on attempts. If the overcurrent event persists for a predetermined time or for a predetermined number of switch-on attempts, the input interface and output interface are permanently disconnected/isolated by switching the further switching element 4 to the "open" operating state. As soon as the further switching element is switched "open" the monitoring of voltage and current at the interfaces 12, 14 can be stopped. The procedure can be activated again by manually restarting the electronic circuit breaker 11, 11' by closing the first switching element 3, preferably via the pre-charge circuit 5 as described above.

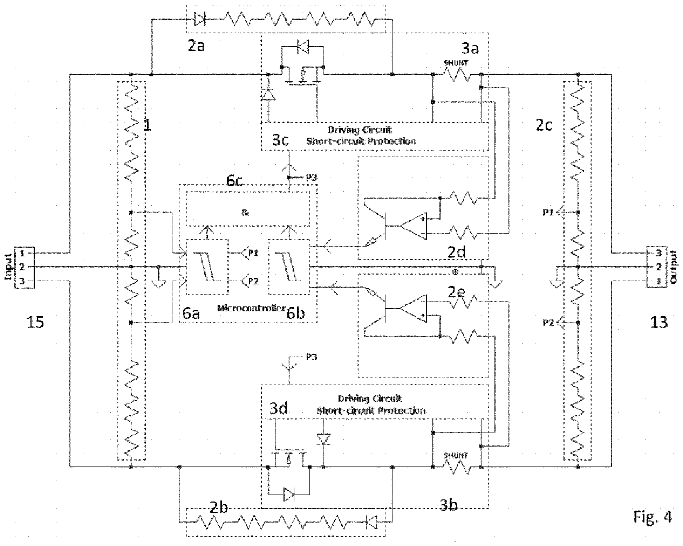

**Fig. 4** shows an electrical circuit of a special embodiment of the inventive electronic circuit breaker 11', in which an example of the electronic elements of the before described components are shown.

The input stage monitoring circuit 1 and the output stage monitoring circuit 2 form a high voltage measurement circuit to monitor both the input voltage and the output voltage. The output stage monitoring circuit comprises the grouping of components 2a-2c, which will do the voltage's measure of output stage.

Fig. 4 shows a current measurement circuit with an adaptation circuit 2d for the current measurement of the positive pole of the output interface and an adaptation circuit 2e for the current measurement of the negative pole of the output interface a current measurement circuit of the output stage monitoring circuit to monitor the output current in both the positive pole and the negative pole. The current measurement circuit comprises a sensing element, a adaptation element, an analog to digital converter element and a processing and control element.

The first switching element 3 comprises switching components (labelled 3a, 3b together with shunt for current sensing) for switching the adaptation circuit 2d and the adaptation circuit 2e respectively and a circuit of drivers 3c, 3d for controlling the switching. The first switching element 3 is a controlled electronic switch with two operating states, "closed" or "open", whose operating state depends on the output impedance evaluation provided by the pre-charge circuit 6. The circuit of drivers 3c, 3d preferably comprise built-in short-circuit protection countermeasures.

The pre-charge circuit 6 comprises a comparator 6a for comparing input voltage and output voltage, a comparator 6b for comparing current flowing in the adaptation circuit 2d and current flowing in the adaptation circuit 2e, and a microcontroller and/or a combination of analogic and digital (logic) circuits 6c to evaluate the output impedance based on the comparison of the input voltage and the output and on the comparison of the current flowing in the adaptation circuit 2d and the current flowing in the adaptation circuit 2e.

**Fig.** 5 shows a Power Bus 13, which comprises several loads **18** and which is fed via two feed points 15. Each feed point 15 comprises a power supply **20,** and a longitudinal voltage decoupler **21.** The voltage decoupler 21 comprises two further power supplies 20 and provides a galvanic isolation within the Power Bus 13 in order to prevent interference due to overvoltages or high-frequency interference voltages between current-carrying conductors and ground potential while keeping an electrical connection within the Power Bus 13. The longitudinal voltage decoupler 21 divides the Power Bus 13 into Power bus segments **13a, 13b,** which are galvanically isolated.

Inventive electronic circuit breakers 11' are integrated in the longitudinal voltage decoupler 21 as well as in the feed points 15: The longitudinal voltage decoupler 21 comprises inductively coupled coils **22** and two inventive electronic circuit breaker 11', one at each interface to the Power bus segments 13a, 13b. At each feed point 15 an inventive electronic circuit breaker 11' is provided in order to interrupt the feeding in case of an overcurrent event. An exemplary short circuit **19** is shown in Fig. 4 between the first two loads 18.

According to the energy distribution networks, in particular Power Busses, the loads connected to the Power Bus must allow the flow of current in both directions defined as follows:
- Outgoing direction: from power supplies 20 that are located in the feed point 15 and/or in the longitudinal voltage decoupler 21 to the Power Bus:
- Incoming direction: from Power Bus to the power supplies 20 that are located either in the feed point 15 or in the longitudinal voltage decoupler 21.

By using the inventive electronic circuit breaker, current is allowed to flow in both directions. At the same time current in the outgoing direction can be cut/limited to avoid side effects of any short-circuit events on the Power Bus.

The inventive electronic circuit breaker 11' limits/cuts the outgoing current Iout (dashed arrows) in the feed points 15 and in the longitudinal voltage decoupler 21 in case of any short-circuit events.

Further, the inventive electronic circuit breaker 11' by-pass the incoming current Iin (solid arrows) in the longitudinal voltage decoupler 21 in dependent of the existence of an overcurrent event.

The inventive electronic circuit breaker 11, 11' enables a prompt switch-on after switching off (i.e. within milliseconds or microseconds), thereby limiting the heat in the event of a temporal short circuit, but ensuring that the operation of the energy distribution network is not interrupted.

For this purpose, it is stored in the evaluation-and-control unit 6 that the first switching element 3 is closed again after a switch-off. At the same time, the input and output of the current limiter 11, 11' are monitored. If the situation has not normalized, current limiting 11, 11' switches off again. This can be repeated as often as required. How often can be stored in the evaluation-and-control unit 6.

### List of reference signs

- 1: input stage monitoring circuit
- 2: output stage monitoring circuit
- 2a-2c: components of output stage voltage monitoring circuit
- 2d: adaptation circuit for the current measurement of positive pole of the output interface
- 2e: adaptation circuit for of the current measurement of negative pole of the output interface
- 3: first switching element for temporary electrical isolation
- 3a: switching component for positive pole and shunt for current sensing
- 3b: switching component for negative pole and shunt for current sensing
- 3c, d: circuit of drivers for controlling the switching
- 4: further switching element for permanent electrical isolation
- 5: pre-charge circuit
- 6: evaluation-and-control unit
- 6a: analogic to digital converter of the evaluation-and-control unit for input stage voltages and output stage voltages
- 6b: analogic to digital converter of the evaluation-and-control unit for current flowing in the positive pole and current flowing in the negative pole
- 6c: microcontroller and/or a combination of analogic and digital (logic) circuits for signal conversion
- 7: LAN/WAN communication stack
- 8: temperature measuring unit
- 9: user interface stage
- 10: Power supply for powering the electronic circuit breaker
- 11, 11': electronic circuit breaker
- 12: input interface
- 13: Power Bus
- 14: output interface
- 15: Feed Point for power bus
- 16: voltage/current sensor to check the output stage impedance
- 17: Driver
- 18: Load in Power Bus or Power Distribution
- 20: Power supply for powering the Power Bus
- 21: Longitudinal Voltage Decoupler
- 22: coils of the longitudinal voltage decoupler

### Literaturliste

[Celduc] https://www.e-catalogue.celduc-relais.com/gb/sdi/398-sdi0501700.html
[Sensata] https://www.sensata.com/products/relays/solid-state-relays/panel-mou nt-dc-output-ssrs/ 1 -dcl -series
[Altran] https://www.altranmagnetics.com/asr-sl-series.html

## Claims

1. Method for operating an energy distribution network (13) with a circuit breaker (11, 11'), the circuit breaker (11, 11') having a first interface (12) and a second interface (14), wherein one of the interfaces (12, 14) is used as output interface and the other is used as input interface, an evaluation-and-control unit (6) and a first switching element (3) for temporary electrical isolation between input interface and output interface, the method comprising:
a. monitoring of current and/or voltage at the output interface of the circuit breaker (11, 11'),
b. checking whether an overcurrent event is present,
wherein step a and step b are performed repeatedly,
c. when an overcurrent event is detected: electrical isolation of the input interface from the output interface by switching off the first switching element (3),
**characterized in**
**that** as first switching element (3) a switching element based on semiconductor is used, and
**that** after switching off the first switching element (3) a switch-on attempt is performed, the switching-on attempt comprising: performing a further check according to step b, and in which, if the further check indicates that the overcurrent event has ended, the input interface and the output interface are electrically reconnected by switching on the first switching element (3),
wherein after a specified number of unsuccessful switch-on attempts, the input interface and the output interface remain electrically isolated.

2. Method according to claim 1, **characterized in that** the number of switch-on attempts are limited.

3. Method according to one of the preceding claims, **characterized in that** a current direction is determined by the evaluation-and-control unit (6).

4. Method according to claim 3, **characterized in that** if the determined direction of the current indicates an overcurrent event in direction from the output interface to the input interface, the overcurrent event does not trigger the switching element (3).

5. Method according to one of the preceding claims, **characterized in that** a voltage is also monitored at the input interface.

6. Method according to one of the preceding claims, **characterized in that** the first switching element (3) is triggered by the evaluation-and-control unit (6) in dependence of the results of step a and step b.

7. Method according to one of the preceding claims, **characterized in that** to maintain the electrical isolation between input interface and output interface, a further switching element (4), in particular a electromechanical relay, connected in series with the first switching element (3) is switched off.

8. Method according to claim 7, **characterized in that** prior to an electrical reconnection of the input interface with the output interface, the capacitance of the energy distribution network (13) is pre-charged by bypassing the electrical isolation of the further switching element (4) with a pre-charge circuit.

9. Circuit breaker, in particular for an energy distribution network, the circuit breaker (11, 11'), comprising:
a first interface (12) and a second interface (14), wherein one of the interfaces is used as output interface and the other one is used as input interface,
a first switching element (3) connected between input interface and output interface for temporary electrical isolation of input interface and output interface,
an output stage monitoring circuit (2) configured to monitor current and voltage at the output interface of the circuit breaker (11, 11'),
an evaluation-and-control unit (6) connected to the output stage monitoring circuit (2) in order to receive the monitored current and/or voltage values, and configured to detect overcurrent events and configured to trigger the first switching element (3) to interrupt the current flow between input interface and output interface in case of a detected overcurrent event,
**characterized in**
**that** the first switching element (3) is a switching element based on a semiconductor,
**that** the output stage monitoring circuit (2) is configured to continue monitoring current and/or voltage at the output interface of the circuit breaker (11, 11') even after electrical isolation of input interface and output interface, and
**that** the evaluation-and-control unit (6) is configured to trigger the first switching element (3) to reconnect input interface and output interface when the overcurrent event has ended.

10. Circuit breaker (11, 11') according to claim 9 **characterized in that** an input stage monitoring circuit (1) is provided, which is configured to monitor voltage at the input interface.

11. Circuit breaker (11') according to one of the claims 9 to 10, **characterized in that** a further switching element (4), preferably an electromechanical relay, is provided between input interface and output interface, the further switching element (4) being configured to electrically and galvanically isolate input interface and output interface from each other.

12. Circuit breaker (11') according to one of the claims 9 to 11 **characterized in that** a pre-charge circuit (5) is provided which bypasses the electrical isolation provided by the further switching element.

13. Circuit breaker (11') according to one of the claims 9 to 12, **characterized in that** the evaluation-and-control unit (6) comprises an user interface stage (9), in particular comprising visual indicators, buttons, potential-free input/output contacts and service/expansion connectors.

14. Circuit breaker (11, 11') according to one of the claims 9 to 13, **characterized in that** the circuit breaker (11, 11') is configured to take energy required to operate the circuit breaker (11, 11') from the energy distribution network (13).

15. Circuit breaker (11') according to one of the claims 9 to 14, **characterized in that** a LAN/WAN communication stack (7) is provided configured to provide a remote access.

16. Circuit breaker (11, 11') according to one of the claims 9 to 15, **characterized in that** the circuit breaker is integrated in a device, in particular in a longitudinal voltage decoupler (21).
